# EUROPEAN PATENT APPLICATION

(11) **EP 4 831 312 A1**
(43) Date of publication of application: **28.10.2026**
(21) Application number: 24907994.8
(22) Date of filing: 16.12.2024
(51) Int. Cl.: C22B 3/24, C22B 26/12, C22B 3/12

(54) **METHOD OF ADSORBING/DESORBING LITHIUM**

(30) Priority: 18.12.2023 KR 20230184816
(71) Applicant: POSCO Holdings Inc., Pohang-si, Gyeongsangbuk-do 37859 (KR)
(72) Inventor: Jung, Myungwon, Pohang-si, Gyeongsangbuk-do 37859 (KR); Kim, Ju Young, Pohang-si, Gyeongsangbuk-do 37859 (KR); Park, Woonkyoung, Pohang-si, Gyeongsangbuk-do 37859 (KR); Yang, Heok, Pohang-si, Gyeongsangbuk-do 37859 (KR); Heo, Jungho, Pohang-si, Gyeongsangbuk-do 37859 (KR); Kim, Ryutae, Pohang-si, Gyeongsangbuk-do 37859 (KR)
(74) Representative: Pfenning, Meinig & Partner mbB
(86) International application number: PCT/KR2024/020448
(87) International publication number: WO 2025/135711

(57) **Abstract**

One embodiment of the present invention may provide a method for adsorbing and desorbing lithium, the method including: an adsorption step of passing a lithium-containing solution through an adsorbent to obtain an adsorbent on which lithium is adsorbed; a washing step of passing a pretreatment solution through the adsorbent on which lithium is adsorbed to remove impurities; and a desorption step of passing a medium through the adsorbent on which lithium is adsorbed to obtain a lithium-containing desorption solution, wherein the pretreatment solution suppresses desorption of lithium adsorbed on the adsorbent in the washing step.

## Description

### [TECHNICAL FIELD]

The present invention relates to a method for adsorbing and desorbing lithium.

### [BACKGROUND ART]

Lithium secondary batteries are essential elements in small devices such as mobile phones and notebook computers, and recently, demand for lithium secondary batteries is also increasing as power sources for hybrid vehicles, electric vehicles, and the like. Accordingly, demand for lithium, which is a key raw material of lithium secondary batteries, is also rapidly increasing.

Lithium, which is such a key material of lithium secondary batteries, is generally extracted from minerals, seawater, brine, and the like. However, the lithium content in the earth's crust is only 0.006%, and because lithium has high reactivity, it is not found in nature in a pure metal form. In general, lithium is extracted in the form of lithium compounds such as Li₂CO₃ and LiOH·H₂O rather than in a pure metal form.

In addition, seawater is abundant worldwide, but has a low lithium content of about 0.17 mg/L, and thus has problems in that lithium extraction efficiency is low and production cost is higher than other lithium raw materials.

The most common method for extracting lithium is to evaporate water from brine and then add a carbonate salt to extract lithium in the form of lithium carbonate. However, in order to extract lithium as lithium carbonate by adding a carbonate, it is necessary to concentrate brine to an economically feasible level and then proceed with a lithium extraction process, and there is a problem in that brines capable of improving the economic feasibility of lithium extraction are not numerous worldwide.

Accordingly, there is an urgent need to develop a technology capable of economically and efficiently recovering lithium from a solution containing lithium. As one of such methods, a technology for selectively adsorbing and desorbing lithium using an adsorbent has been studied.

### [DETAILED DESCRIPTION OF THE INVENTION]

### [Technical Problem]

In one embodiment of the present invention, in a technology for recovering lithium by a technology for adsorbing and desorbing lithium using an adsorbent, it is intended to provide a process capable of recovering lithium more economically and effectively by including a washing step in the middle.

### [Technical Solution]

A method for adsorbing and desorbing lithium according to one embodiment of the present invention may include: an adsorption step of passing a lithium-containing solution through an adsorbent to obtain an adsorbent on which lithium is adsorbed; a washing step of passing a pretreatment solution through the adsorbent on which lithium is adsorbed to remove impurities; and a desorption step of passing a medium through the adsorbent on which lithium is adsorbed to obtain a lithium-containing desorption solution, wherein the pretreatment solution suppresses desorption of lithium adsorbed on the adsorbent in the washing step.

A concentration of total dissolved solids (Total Dissolved Solid) of the pretreatment solution may be in a range of 0.5 mol/L to 3.0 mol/L.

The pretreatment solution may be a solution including an anion corresponding to the adsorbed lithium.

The pretreatment solution may be a solution including one or more salts selected from the group consisting of sodium (Na), potassium (K), calcium (Ca), magnesium (Mg), and lithium (Li).

The pretreatment solution may be a solution including one or more selected from the group consisting of NaCl, KCl, CaCl₂, MgCl₂, and LiCl.

The pretreatment solution may be a solution including lithium at a concentration of 0.05 g/L to 3.0 g/L based on the entire pretreatment solution.

In the adsorption step, a lithium concentration of the lithium-containing solution may be 0.03 g/L to 2.0 g/L.

A lithium concentration of the medium used in the desorption step may be 0.05 g/L to 1.50 g/L.

With respect to an amount of lithium present in the adsorbent after the adsorption step, an amount of lithium contained in the pretreatment solution after the washing step may be in a range of 0.1 wt% to 10.0 wt%.

With respect to the amount of lithium present in the adsorbent after the adsorption step, an amount of lithium obtained in the desorption step may be in a range of 90.0 wt% to 99.9 wt%.

The adsorbent may be an aluminum-based adsorbent.

The method may further include a step of concentrating an entire desorption solution obtained through the desorption step.

### [Advantageous Effects]

The method for adsorbing and desorbing lithium according to one embodiment of the present invention can economically and effectively improve a lithium recovery rate by desorbing lithium using a solution including an anion corresponding to the adsorbed lithium.

### [BRIEF DESCRIPTION OF THE DRAWINGS]

FIG. 1 shows data on an amount of lithium desorption according to concentration conditions of total dissolved solids in a pretreatment solution in a washing step according to one embodiment of the present invention.
FIG. 2 shows lithium concentration data according to an amount of solution passed through an adsorbent in a washing step and a desorption step according to one embodiment of the present invention.
FIG. 3 shows lithium concentration data according to an amount of solution passed through an adsorbent in a lithium desorption step according to a Comparative Example of the present invention.
FIG. 4 shows sodium concentration data according to an amount of solution passed through an adsorbent in a lithium desorption step according to a Comparative Example of the present invention.
FIG. 5 shows data of lithium concentration and calcium concentration according to BV in a washing step and a desorption step according to one embodiment of the present invention.
FIG. 6 shows data of lithium concentration and calcium concentration according to BV in a lithium desorption step according to a Comparative Example of the present invention.

### [MODE FOR CARRYING OUT THE INVENTION]

In the specification of the present invention, terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### Method for Adsorbing and Desorbing Lithium

As described above, there is a need to economically and efficiently recover lithium from a solution containing lithium. In the present embodiment, such a problem has been solved by implementing a process of removing impurities using a pretreatment solution between adsorption and desorption of lithium using an adsorbent.

Specifically, the method for adsorbing and desorbing lithium according to one embodiment may include: an adsorption step of passing a lithium-containing solution through an adsorbent to obtain an adsorbent on which lithium is adsorbed; a washing step of passing a pretreatment solution through the adsorbent on which lithium is adsorbed to remove impurities; and a desorption step of passing a medium through the adsorbent on which lithium is adsorbed to obtain a lithium-containing desorption solution, wherein the pretreatment solution suppresses desorption of lithium adsorbed on the adsorbent in the washing step.

The adsorption step means a step of adsorbing lithium from the lithium-containing solution. Specifically, the lithium-containing solution may be passed through the adsorbent to adsorb lithium on the adsorbent.

At this time, the lithium concentration of the lithium-containing solution may be in a range of 0.03 g/L to 2.0 g/L, more specifically 0.1 g/L to 2.0 g/L or 0.5 g/L to 1.5 g/L. When the lithium concentration of the lithium-containing solution is less than 0.03 g/L, lithium adsorption on the adsorbent may not be well performed, thereby reducing adsorption efficiency, and the need to operate a plurality of adsorption columns may increase, thereby reducing economic feasibility. In addition, when the lithium concentration of the lithium-containing solution exceeds 2.0 g/L, the time to reach a breakthrough point of the adsorbent is short, and thus a plurality of adsorption columns should be operated, thereby causing a problem of relatively reduced economic feasibility. Accordingly, it is preferable that the lithium concentration contained in the lithium-containing solution satisfy the above range.

The adsorbent is for adsorbing lithium dissolved in the lithium-containing solution and may be an aluminum-based adsorbent, and may include, for example, aluminum hydroxide. When the aluminum-based adsorbent including aluminum hydroxide is used as in the present embodiment, there are advantages in that an adsorption amount of lithium dissolved in the lithium-containing solution is high, aluminum loss in a desorption process to be described below is almost absent, a lifespan of the adsorbent is long, and economic feasibility of the lithium extraction process is excellent.

In addition, the aluminum-based adsorbent may be a molded body including adsorbent powder and a binder.

The adsorbent powder may be, for example, adsorbent powder including aluminum hydroxide. Advantages of using the adsorbent powder including aluminum hydroxide are the same as described above.

The binder is for manufacturing the adsorbent powder into a molded body having an appropriate form, and serves to bind the adsorbent powder to each other. The binder may include, for example, at least one of polyvinyl chloride (PVC), polysulfone, and polyaniline. In particular, in the present embodiment, it is preferable that the binder include polyvinyl chloride (PVC), which can provide excellent bonding force between adsorbent powders.

Meanwhile, the step of passing the lithium-containing solution through the aluminum-based adsorbent to adsorb lithium on the aluminum-based adsorbent includes, for example, a reaction of the following Reaction Formula 1.

[Reaction Formula 1] LiCl(1-x)·Al(OH)₃·nH₂O + xLiCl → LiCl·Al(OH)₃·nH₂O + (1-x)LiCl

After the adsorption step and before the desorption step, a washing step may be performed. The washing step means a step of removing impurities by passing the pretreatment solution through the adsorbent on which lithium is adsorbed.

The pretreatment solution may have a concentration of total dissolved solids (TDS) in a range of 0.5 mol/L to 3.0 mol/L, specifically 0.75 mol/L to 3.0 mol/L, 1.0 mol/L to 3.0 mol/L, 1.0 mol/L to 2.5 mol/L, 1.0 mol/L to 2.3 mol/L, or 1.0 mol/L to 2.0 mol/L. At this time, the total dissolved solids means a concentration obtained by including all salts regardless of the type of salt.

When the concentration of the total dissolved solids is below the above range, lithium may be desorbed, thereby hindering a lithium recovery rate, and impurities may not be efficiently removed. In addition, when the concentration of the total dissolved solids exceeds the above range, the salt may rather act as an impurity. In particular, considering that the solubility of sodium chloride (NaCl), which accounts for 50 wt% or more of the total weight of the total dissolved solids, is about 6.141 mol/L (about 358.9 g/L, @25°C), there is a problem in that precipitates are generated due to becoming a saturated solution, making it difficult to perform an impurity removal process, and a load in a subsequent process may increase. Accordingly, it is preferable that the total dissolved solids included in the pretreatment solution satisfy the above range.

At this time, the pretreatment solution may be a solution including an anion corresponding to the adsorbed lithium. Specifically, the anion may be Cl⁻. Since adsorption/desorption using an Al-based adsorbent is possible when Li in a solution is in the form of LiCl, and when another anion is used for pretreatment, there is a possibility that the corresponding anion may act as an impurity in the future, it may be preferable that the anion be Cl⁻.

In addition, the pretreatment solution may be a solution including one or more salts selected from the group consisting of sodium (Na), potassium (K), calcium (Ca), magnesium (Mg), and lithium (Li).

Specifically, the pretreatment solution may be a solution including one or more selected from the group consisting of NaCl, KCl, CaCl₂, MgCl₂, and LiCl.

In addition, the pretreatment solution may include lithium. By using the pretreatment solution including lithium, the influence of other impurities can be reduced, and if the washing solution is mixed with raw brine and extracted again, lithium loss may not be large. At this time, the concentration of lithium included in the pretreatment solution may be 0.05 g/L to 3.0 g/L, specifically 0.10 g/L to 2.5 g/L, 0.15 g/L to 2.0 g/L, 0.15 g/L to 1.0 g/L, or 0.20 g/L to 0.7 g/L. When the concentration exceeds the above range, economic feasibility may decrease, and when the concentration is below the above range, it may be difficult to reduce the influence of other impurities.

With respect to the amount of lithium present in the adsorbent after the adsorption step, the amount of lithium contained in the pretreatment solution after passing through the adsorbent may be in a range of 0.1 wt% to 10.0 wt%, and specifically 0.5 wt% to 8.0 wt%, 1.0 wt% to 6.0 wt%, 1.0 wt% to 4.0 wt%, or 1.0 wt% to 2.5 wt%.

This means that the pretreatment solution suppresses desorption of lithium adsorbed on the adsorbent in the washing step.

After the washing step is performed, a step of obtaining a lithium-containing desorption solution is performed.

Specifically, the lithium-containing desorption solution may be obtained by passing a medium (for example, distilled water or an aqueous solution including a lithium salt) through the aluminum adsorbent on which lithium is adsorbed.

At this time, an amount of the medium passed through the aluminum adsorbent on which lithium is adsorbed may be, based on 1 bed volume (BV), which is a volume of an adsorbent column, 10 BV to 50 BV, and more specifically 20 BV to 40 BV.

In the entire lithium-containing desorption solution obtained by passing the medium through the adsorbent, in order to desorb most of the lithium adsorbed on the adsorbent so that the lithium concentration in the desorption solution after 80 vol% of the desorption solution has passed includes 0.2 g/L or less, specifically 0.1 g/L or 0.05 g/L, and to make it possible to adsorb lithium again using the adsorbent, a step of passing the medium in the above amount range through the aluminum adsorbent on which lithium is adsorbed may be required.

Lithium hydroxide may be recovered from a desorption solution having a high lithium concentration among desorption solutions obtained through the desorption step, but is not limited thereto. Specifically, as the lithium-containing desorption solution, the lithium-containing desorption solution up to the step of passing a medium in an amount of 10 BV after the washing step in which impurities are removed may be used in a process, and preferably, the lithium-containing desorption solution up to the step of passing a medium in an amount of 7 BV or 5 BV may be used in a process, but this may vary depending on a shape of a desorption curve.

With respect to the amount of lithium present in the adsorbent after the adsorption step, the amount of lithium obtained in the desorption step may be in a range of 90.0 wt% to 99.9 wt%, and specifically in a range of 95.0 wt% to 99.9 wt%.

When the washing step according to the present invention is not included, with respect to the amount of lithium present in the adsorbent after the adsorption step, the amount of lost lithium may be in a range of 10.0 wt% to 50.0 wt%, and specifically in a range of 25.0 wt% to 45.0 wt% or 30.0 wt% to 40.0 wt%. The reason such lithium loss occurs is that a lithium-containing desorption solution including impurities at a high concentration may be difficult to use in a lithium recovery process. It is preferable that the concentration of impurities (salts excluding lithium) be low, and specifically, in the case of a lithium-containing desorption solution including impurities (salts excluding lithium) in an amount of 20 g/L, 15 g/L, or 10 g/L or less, a recovery rate of lithium hydroxide obtained after performing a subsequent process to be described below may be excellent.

The step of passing the medium through the aluminum adsorbent on which lithium is adsorbed to obtain a lithium-containing desorption solution includes, for example, a reaction of the following Reaction Formula 2.

[Reaction Formula 2] LiCl·Al(OH)₃·nH₂O → LiCl(1-x)·Al(OH)₃·nH₂O + xLiCl

In one embodiment of the present invention, the medium used in the desorption step may be an aqueous solution including a lithium salt, and specifically, the medium may be an aqueous solution including lithium chloride. In this case, the concentration of lithium in the obtained desorption solution may be increased. Such improvement in the lithium concentration in the desorption solution can reduce a load in a subsequent concentration process.

Specifically, the lithium concentration in the medium may be in a range of 0.05 g/L to 1.50 g/L, and more specifically 0.10 g/L to 1.00 g/L, 0.10 g/L to 0.80 g/L, or 0.10 g/L to 0.40 g/L. When the lithium concentration in the medium is below the above range, lithium (Li) included in the aluminum adsorbent may be lost, thereby damaging an LDH (Layered Double Hydroxide) structure. When the lithium concentration exceeds the above range, adsorption, rather than desorption, may occur.

The concentration of lithium included in the lithium-containing desorption solution obtained by the above method may be 0.1 g/L to 3.0 g/L or 0.2 g/L to 3.0 g/L, and more specifically 0.8 g/L to 2.5 g/L.

When the lithium concentration of the desorption solution is high, it means that the amount of water to be removed in a subsequent concentration step is reduced, and thus the process load of a subsequent process can be greatly improved. At this time, the subsequent process may mean a concentration step.

The method for adsorbing and desorbing lithium according to one embodiment may further include a step of concentrating the entire desorption solution obtained through the desorption step.

Specifically, the concentration step may include a concentration process of the desorption solution using reverse osmosis and electrodialysis methods, and through this, a target lithium concentration degree may be determined according to properties of an intermediate material to be extracted. When additional concentration is required in addition to the above methods, a desired lithium concentration may be increased to a desired level through a concentration step using a reduced-pressure/evaporation method.

Hereinafter, preferred Examples of the present invention will be described. However, the following Examples are merely preferred embodiments of the present invention, and the present invention is not limited to the following Examples.

### Experimental Example-Experiment for Confirming Effect of Suppressing Lithium Extraction According to Total Dissolved Solids Concentration

First, an experiment was conducted to confirm an appropriate concentration range of total dissolved solids in the pretreatment solution used in the washing step.

Brine having a composition shown in Table 1 below was prepared.

**[Table 1]**

| Brine Composition | Li | Ca | Mg | B | K | Na |
|---|---|---|---|---|---|---|
| Concentration Value (mg/L) | 75 | 19000 | 1400 | 300 | 6500 | 49000 |

### (A) Adsorption Step

4 L of the brine having the composition of Table 1 was passed through an adsorbent including aluminum hydroxide.

### (B) Washing Step

Distilled water and an aqueous sodium chloride solution having a concentration range of 0.2 mol/L to 6.2 mol/L were used as a pretreatment solution. After 0.2 L of the corresponding pretreatment solution was passed through, the concentration of lithium present in the washing solution was measured.

### Examples

Brine having the composition shown in Table 1 above was prepared.

### (A) Adsorption Step

4 L of the brine was passed through an adsorbent including aluminum hydroxide.

### (B) Washing Step

0.2 L of an aqueous sodium chloride solution having a concentration of 30 g/L (0.513 mol/L) was passed through to remove impurities.

### (C) Desorption Step

Next, 4 L of an aqueous lithium chloride solution per volume was passed through the adsorbent on which lithium was adsorbed to obtain a lithium-containing desorption solution.

At this time, an amount of a medium for performing one desorption step was defined as 1 bed volume (BV). Specifically, the desorption step was performed up to 40 BV using an aqueous lithium chloride solution having a concentration of 0.15 g/L under desorption conditions of a temperature of 40°C and a flow rate of 30 mL/min.

### Comparative Example

Brine having a composition shown in Table 2 below was prepared.

**[Table 2]**

| Brine Composition | Li | S | Ca | Mg | B | K | Na |
|---|---|---|---|---|---|---|---|
| Concentration Value (mg/L) | 300 | 50 | 44000 | 18 | 506 | 24000 | 72000 |

In the Comparative Example, adsorption and desorption of lithium were performed in the same manner as in Example 1, except that brine having the composition shown in Table 2 was used and the washing step was not performed in Example 1.

The brine used in the Comparative Example has higher impurity contents of other components (Ca, Na, K) including Li than the brine used in the Example. The corresponding composition corresponds to a composition of geothermal brine, which is one of resources classified as an unconventional resource.

When adsorption is performed using brine having the corresponding composition, a relatively large amount of impurity (ions excluding lithium) components are attached to the adsorbent surface. Specifically, impurities, unlike lithium, are not adsorbed inside a lattice structure in the adsorption process and are present on the adsorbent surface.

When a desorption process is performed without a washing step, when a medium is introduced, the impurities present on the adsorbent surface as described above are introduced into the medium. That is, impurities are included in the medium, and the concentration of total dissolved solids may temporarily become 0.5 mol/L or more.

That is, through this, it can be confirmed whether there is a phenomenon of delayed desorption of lithium (Li) due to the concentration of total dissolved solids caused by impurities dissolved into the medium from the adsorbent surface.

Experimental results confirmed through the above-described Examples and Comparative Example are as follows.

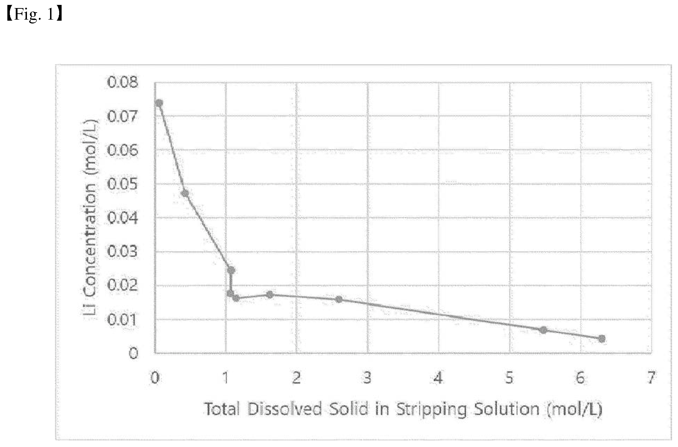

FIG. 1 shows data on an amount of lithium desorption according to concentration conditions of total dissolved solids in a pretreatment solution in a washing step according to one embodiment of the present invention.

Referring to FIG. 1, as the concentration of total dissolved solids in the pretreatment solution (stripping solution) decreases, lithium (Li) adsorbed on the adsorbent is desorbed in a larger amount and present at a high concentration in the washing solution. Specifically, when the concentration of total dissolved solids is less than 0.5 mol/L, the amount of lithium present in the washing solution is present at a concentration of 0.04 mol/L or more, and thus lithium loss occurs.

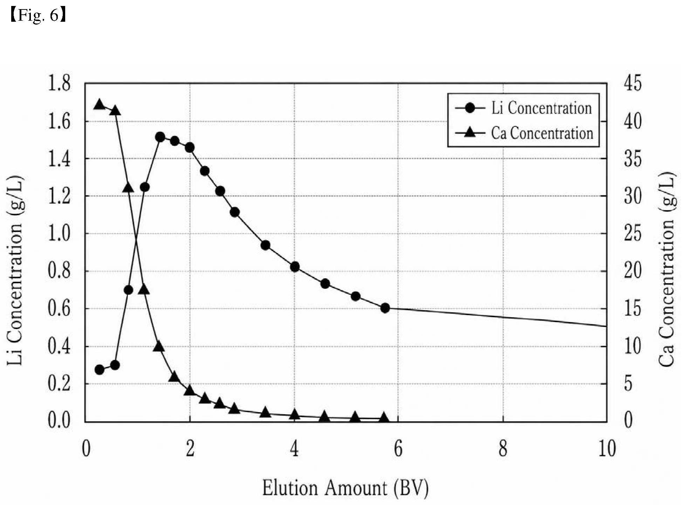

Specifically, in FIG. 6, some delay in lithium desorption is confirmed in an initial desorption solution of 0.75 BV or less, in which the calcium concentration is a very high concentration of 30 g/L. Through this, when impurities are present at a high concentration on the adsorbent surface due to, for example, inclusion of a large amount of impurities in the lithium-containing solution used in the adsorption step, it can be expected that even when the total dissolved solids concentration of the pretreatment solution in the washing step is 0.5 mol/L to 1.0 mol/L, the amount of lithium obtained in the subsequent desorption step can reach a range of 90.0 wt% to 99.9 wt%.

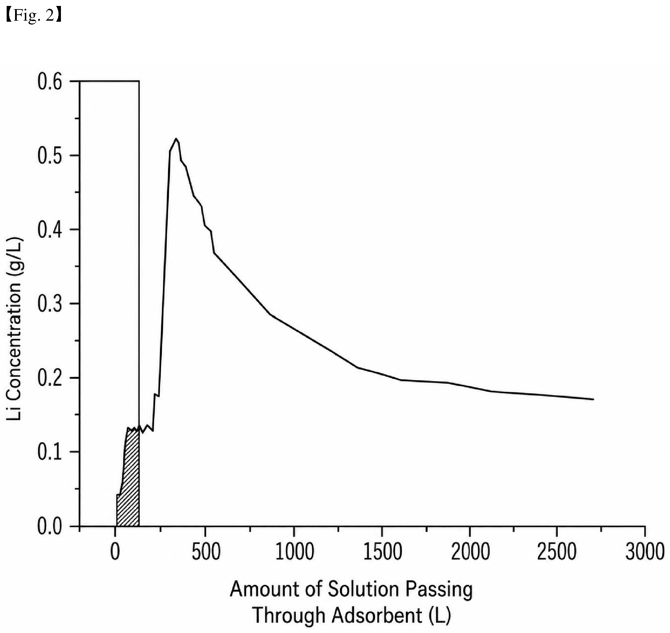

FIG. 2 shows lithium concentration data according to an amount of solution passed through an adsorbent in a washing step and a desorption step according to one embodiment of the present invention.

In FIG. 2, a section indicated in gray is data in which washing was performed using the pretreatment solution, and the area of the indicated section is 13.961 g, which means the amount of lithium desorbed in the washing step.

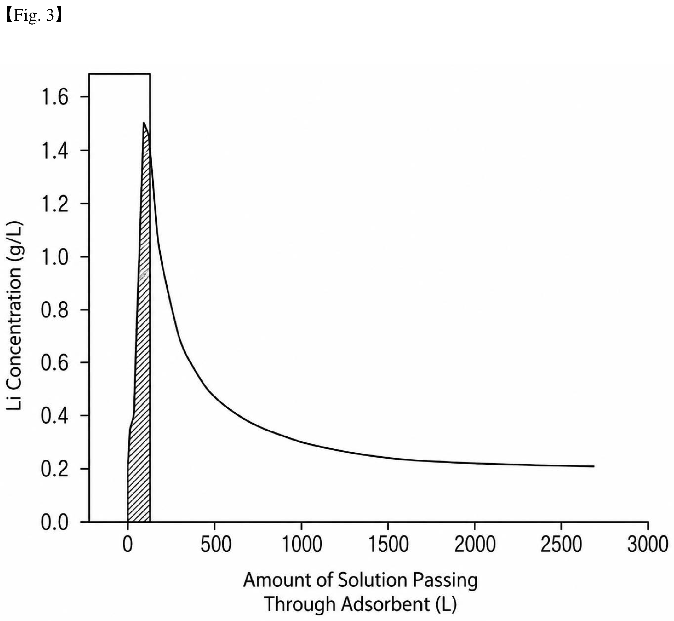

FIG. 3 shows lithium concentration data according to an amount of solution passed through an adsorbent in a lithium desorption step according to a Comparative Example of the present invention.

In FIG. 3, a section indicated in gray is data of an initial desorption step, and the area of the indicated section is 87.135 g, which means the amount of lithium desorbed in the initial desorption step.

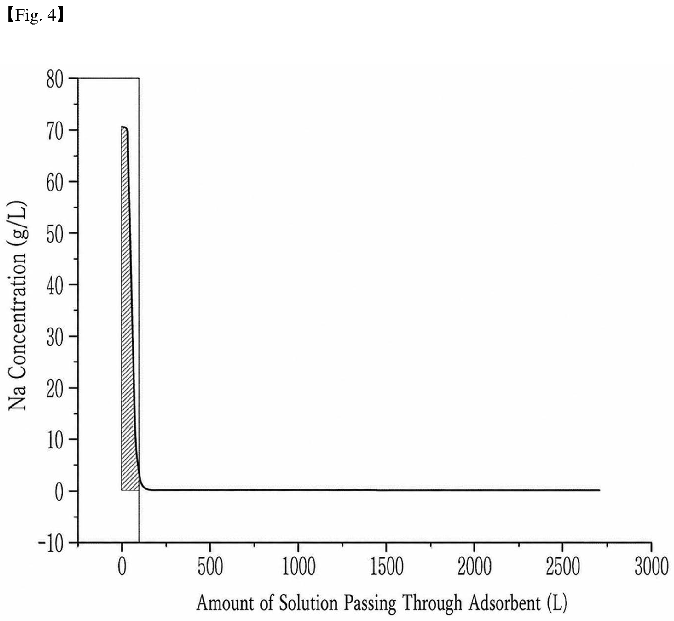

FIG. 4 shows sodium concentration data according to an amount of solution passed through an adsorbent in a lithium desorption step according to a Comparative Example of the present invention.

In FIG. 4, a section indicated in gray is data of an initial desorption step, and the area of the indicated section is 4142.577 g, which means the amount of sodium desorbed in the initial desorption step.

That is, as can be confirmed through FIGS. 3 and 4, the desorption solution obtained in the initial desorption step has a high content of impurities and is difficult to utilize, and lithium is also contained in the corresponding desorption solution, confirming that the lithium recovery rate is hindered as lithium is lost.

In addition, as can be confirmed through FIGS. 2 and 3, when impurities are initially removed through the washing step, the lithium recovery rate is further improved in the subsequent desorption step.

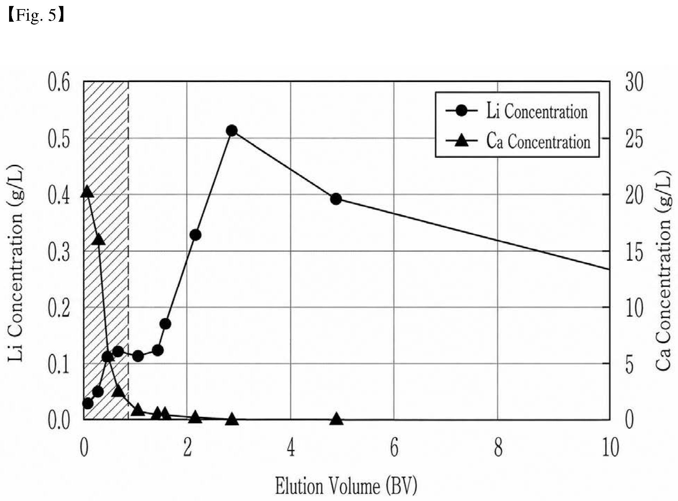

FIG. 5 shows data of lithium concentration and calcium concentration according to BV in a washing step and a desorption step according to one embodiment of the present invention, and FIG. 6 shows data of lithium concentration and calcium concentration according to BV in a lithium desorption step according to a Comparative Example of the present invention.

Through comparison of FIGS. 5 and 6, it can be confirmed that calcium (Ca), which is an impurity, is mostly desorbed within 2 BV regardless of whether the washing step is performed, whereas in the Example, lithium (Li) in an amount of 32.8 mg, which is 2% of the total amount of lithium in the desorption solution up to 30 BV, is desorbed within 2 BV, while in the Comparative Example, lithium in an amount of 174.2 mg, which is 32% of the total amount of lithium in the desorption solution up to 30 BV, is desorbed within 2 BV.

Specifically, referring to FIG. 6, when the washing step according to the present embodiment is not included, some delay in lithium desorption is confirmed in an initial desorption solution of 0.75 BV or less, in which the calcium concentration is a very high concentration of 30 g/L. However, the amount of total dissolved solids soon decreases, and lithium is desorbed at a high concentration in a section in which impurities are still present at a high concentration, confirming that selective separation from impurities is difficult.

That is, it can be confirmed that, when the washing step according to the present embodiment is not included, lithium is desorbed together with impurities having a high content in the initial desorption step, thereby lowering the lithium recovery rate.

The present invention is not limited to the above Examples and may be manufactured in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A method for adsorbing and desorbing lithium, comprising:
an adsorption step of passing a lithium-containing solution through an adsorbent to obtain an adsorbent on which lithium is adsorbed;
a washing step of passing a pretreatment solution through the adsorbent on which lithium is adsorbed to remove impurities; and
a desorption step of passing a medium through the adsorbent on which lithium is adsorbed to obtain a lithium-containing desorption solution,
wherein the pretreatment solution suppresses desorption of lithium adsorbed on the adsorbent in the washing step.

2. The method for adsorbing and desorbing lithium of claim 1,
wherein the pretreatment solution has a concentration of total dissolved solids (Total Dissolved Solid) in a range of 0.5 mol/L to 3.0 mol/L.

3. The method for adsorbing and desorbing lithium of claim 1,
wherein the pretreatment solution is a solution including an anion corresponding to the adsorbed lithium.

4. The method for adsorbing and desorbing lithium of claim 1,
wherein the pretreatment solution is a solution including one or more salts selected from the group consisting of sodium (Na), potassium (K), calcium (Ca), magnesium (Mg), and lithium (Li).

5. The method for adsorbing and desorbing lithium of claim 1,
wherein the pretreatment solution is a solution including one or more selected from the group consisting of NaCl, KCl, CaCl₂, MgCl₂, and LiCl.

6. The method for adsorbing and desorbing lithium of claim 1,
wherein the pretreatment solution is a solution including lithium at a concentration of 0.05 g/L to 3.0 g/L based on an entire pretreatment solution.

7. The method for adsorbing and desorbing lithium of claim 1,
wherein, in the adsorption step, a lithium concentration of the lithium-containing solution is 0.03 g/L to 2.0 g/L.

8. The method for adsorbing and desorbing lithium of claim 1,
wherein a lithium concentration of the medium used in the desorption step is 0.05 g/L to 1.50 g/L.

9. The method for adsorbing and desorbing lithium of claim 1,
wherein, with respect to an amount of lithium present in the adsorbent after the adsorption step,
an amount of lithium contained in the pretreatment solution after the washing step is in a range of 0.1 wt% to 10.0 wt%.

10. The method for adsorbing and desorbing lithium of claim 1,
wherein, with respect to an amount of lithium present in the adsorbent after the adsorption step,
an amount of lithium obtained in the desorption step is in a range of 90.0 wt% to 99.9 wt%.

11. The method for adsorbing and desorbing lithium of claim 1,
wherein the adsorbent is an aluminum-based adsorbent.

12. The method for adsorbing and desorbing lithium of claim 1,
further comprising concentrating an entire desorption solution obtained through the desorption step.
